# EUROPÄISCHE PATENTSCHRIFT

(11) **EP 3 772 885 B1**
(45) Veröffentlichungstag und Bekanntmachung des Hinweises auf die Patenterteilung: **04.05.2022**
(21) Anmeldenummer: 19721542.9
(22) Anmeldetag: 11.04.2019
(51) Int. Cl.: A01D 17/10, B65G 15/52

(54) **SIEBBANDEINHEIT FÜR EINE ERNTEMASCHINE ODER FÜR EINE ERNTEGUTTRANSPORTEINHEIT**
SCREENING BELT UNIT FOR A HARVESTING MACHINE OR FOR A CROP TRANSPORTATION UNIT
UNITÉ TABLIER-CRIBLEUR D'UNE RÉCOLTEUSE OU D'UNE UNITÉ DE TRANSPORT DE PRODUITS DE RÉCOLTE

(30) Priorität: 13.04.2018 DE 102018108883
(43) Veröffentlichungstag der Anmeldung: 17.02.2021
(73) Patentinhaber: Grimme Landmaschinenfabrik GmbH & Co. KG, 49401 Damme (DE)
(72) Erfinder: ROSS, Julian, 59889 Eslohe (DE)
(74) Vertreter: Wischmeyer, André
(86) Internationale Anmeldenummer: PCT/EP2019/059306
(87) Internationale Veröffentlichungsnummer: WO 2019/197552

(56) Entgegenhaltungen:
- EP-A1- 0 059 950
- EP-A1- 0 141 786
- DE-A1- 3 807 294
- DE-A1- 4 313 320
- US-A- 5 176 248

## Beschreibung

Die vorliegende Erfindung betrifft eine Siebbandeinheit für eine Erntemaschine oder Ernteguttransportvorrichtung, insbesondere für einen Hackfruchternter oder ein Hackfruchttransportband und zum Absieben von Beimengen eines Gemisches umfassend Erntegut und Beimengen insbesondere in Form von Boden, Kluten und Steinen, wobei die Siebbandeinheit ein Siebband umfasst, welches wenigstens zwei vorzugsweise als Trägerriemen oder -ketten ausgebildete Endlosträger aufweist, zwischen denen in Richtung quer zur Förderrichtung Siebstäbe angeordnet sind. Zu den Ernteguttransportvorrichtungen gehören insbesondere Feldverladestationen, Sortieranlagen und Einlagerungs- und Auslagerungsgeräte. Des Weiteren betrifft die Erfindung eine Erntemaschine bzw. eine Ernteguttransporteinheit mit einer entsprechenden Siebbandeinheit.

Beim Ernten und Transportieren von Hackfrüchten, insbesondere von Kartoffeln durch ein gattungsgemäßes Siebband sollen einerseits ungewünschte Beimengen in Form von Erde entweder zum Schutz des Ernteguts gezielt mitgeführt und darüber hinaus jedoch ebenso gezielt aus dem Erntegut-Beimengen-Gemisch entfernt werden. Gleichzeitig soll verhindert werden, dass je nach Größe des zu siebenden bzw. zu transportierenden Ernteguts zu kleine Fraktionen von Erntegut durch das Siebband hindurchfallen oder beim Transport gequetscht werden.

In der DE 27 15 108 wurde hierzu vorgeschlagen, die Siebbandteilung dergestalt zu variieren, dass nachträglich an den vorhandenen Siebbändern anzubringende Zusatzquerstäbe zu montieren sind, die zu einer Variation der Siebbandteilung führen. Die Zusatzquerstäbe sind einzeln zu montieren, was mit einem entsprechenden Aufwand einhergeht.

In der US 5,176,248 ist mittig zwischen äußeren Endlosträgern ein weiterer, flexibler Endlosträger angeordnet, aufgrund dessen in Förderrichtung betrachtet nebeneinander liegende Siebstäbe zueinander angewinkelt werden können.

Es ist Aufgabe der vorliegenden Erfindung, den für eine Änderung der Siebbandteilung notwendigen Aufwand insbesondere während des Betriebs der jeweiligen Vorrichtung zu minimieren.

Die Aufgabe wird erfindungsgemäß gelöst durch eine Siebbandeinheit, bei der ein in seiner Form veränderbares Verbindungsstück zwischen in Förderrichtung einander (unabhängig von ihrer jeweiligen Höhe) nachfolgender Siebstäbe angeordnet ist. Aufgrund der Form des Verbindungsstücks, insbesondere in einem von äußeren Kräften unbelasteten Zustand, sowie einer mit einer Krafteinwirkung einhergehenden Änderung der Form ergeben sich unterschiedliche Abstände der einander nachfolgenden Siebstäbe. Während das Verbindungsstück auch die Verbindung der Siebstäbe zum Endlosträger herstellen kann, ist es besonders vorteilhaft, wenn zumindest eine Reihe von Siebstäben am Endlosträger befestigt ist und das Verbindungsstück eine Verbindung zwischen den am Endlosträger festgelegten Siebstäben und dem in Förderrichtung dann nachfolgenden Siebstab herstellt. Insofern werden durch eine Formänderung des Verbindungsstücks dann die relativ zu den fest am Endlosträger angeordneten Siebstäbe beweglichen Siebstäbe in eine andere Position gebracht, was mit einer Änderung des Abstandes der Siebstäbe entweder in Förderrichtung oder quer zur Förderrichtung einhergeht.

Die beweglich angeordneten Siebstäbe können oberhalb oder unterhalb der festgelegten Siebstäbe angeordnet sein, so dass sich Taschen ergeben, deren Ausprägung je nach Form des Verbindungstücks im Verlauf einer Förderstrecke geändert werden kann.

Eine Formänderung kann bewirkt werden durch eine Kraftentwicklung eines Positioniermittels von außen, beispielsweise einer Rolle oder Führungsschiene, die abschnittsweise entlang des Endlosträgers und der Förderstrecke angeordnet ist. Alternativ oder auch ergänzend kann das Verbindungsstück auch durch das Anlegen von äußeren Spannungen, insbesondere bei elektromechanisch wirkenden Verbindungsstücken bewegt werden.

Ebenfalls kann das Verbindungsstück einen Hohlkörper aufweisen, der mit einem Fluid gefüllt werden kann oder in dem ein Unterdruck erzeugt werden kann gegenüber einer Umgebung, so dass hierdurch eine Formänderung des Verbindungsstücks und damit einhergehend eine Abstandsänderung erfolgt. Das Verbindungsstück kann durchgängig entlang der Siebstäbe angeordnet sein, um alle beweglichen Siebstäbe gleichmäßig zu bewegen, es kann sich auch um abschnittsweise entlang des Endlosträgers vorhandene Verbindungsstücke handeln.

Die Formänderung kann sowohl in Richtung senkrecht zur Förderrichtung, insbesondere nach "oben" und "unten" betrachtet in Förderrichtung im Obertrum einer Siebbandeinheit erfolgen. Es kann sich auch um eine Bewegung zwischen zwei Förderstäben in Richtung oder entgegen der Richtung der Förderrichtung handeln.

Etwaige Positionierungs- oder Führungsmittel beispielsweise in Form von Rollen oder Schienen entlang des Endlosträgers können das Verbindungsstück zusammendrücken. Das Verbindungsstück kann alternativ der ergänzend anhand von ineinandergreifenden Führungselementen langgezogen oder gedehnt werden.

Eine erfindungsgemäße Siebbandeinheit weist gemäß einer Weiterbildung der Erfindung an den in Förderrichtung betrachtet linken und rechten Endlosträgern fest angeordnete Siebstäbe auf, zwischen denen über ein oder mehrere Verbindungsstücke oder -elemente beweglich angeordnete Siebstäbe angeordnet sind, wobei die Verbindungsstücke elastisch und somit in ihrer Form variierbar ausgebildet sind. Durch die in einem unbelasteten Zustand vorgegebene Form des Verbindungselements oder -stücks, gegebenenfalls unterstützt durch eine Schwerkraftwirkung, sind die beweglich angeordneten Siebstäbe, deren Breite geringer ist als die Breite der an den Endlosträgern befestigten Siebstäbe in einem ersten Abstand zu den fest angeordneten Siebstäben. Beispielsweise handelt es sich bei den Verbindungsstücken um PU-Scharniere oder Gummischarniere, die jeweils an dem in Förderrichtung vorderen und hinteren Siebstab befestigt sind, wobei der beweglich angeordnete Siebstab in der Mitte zwischen diesen beiden fest angeordneten Förderstäben angeordnet ist. Durch das Einwirken eines mit einer Anlagefläche für die beweglich angeordneten Siebstäbe oder deren Verbindungsstück ausgebildeten Positioniermittels, dessen Abstand sich relativ zum Endlosträger bzw. zu den fest angeordneten Siebstäben vorzugsweise variierbar ist, wird der Abstand der beweglich angeordneten Siebstäbe zu den fest angeordneten Siebstäben variiert, wobei das elastische Verbindungsstück deformiert wird. Anschließend kann es wieder in seine Ausgangsposition zurück. Beispielsweise handelt es sich bei den Positioniermitteln um Gleitschienen, die entlang der Endlosträger am Maschinenrahmen oder am Rahmen der Siebbandeinheit befestigt sind oder auch um entsprechend nur abschnittsweise und punktuell eine Höhenverstellung der beweglichen Siebstäbe bewirkende Rollen.

Eine erfindungsgemäße Siebbandeinheit kann herkömmlich über Reibantriebe oder Zwangsantriebe unter den Riemen oder Stäben angetrieben werden.

Schließlich wird die eingangs gestellte Aufgabe ebenfalls gelöst über relativ zu den Endlosträgern beweglich angeordnete Siebstäbe, die sich insbesondere in Förderrichtung mit fest an den Endlosträgern angeordneten Siebstäben abwechseln. Hierbei kann jeder zweite Siebstab beweglich angeordnet sein, es kann allerdings auch nur jeder dritte oder vierte Siebstab beweglich angebunden sein. Die beweglich angeordneten Siebstäbe sind insbesondere in Richtung quer zur Förderrichtung bewegbar, wozu ein entsprechend mit einer Bewegungskomponente quer zur Förderrichtung versehenes Gelenk vorhanden ist. Dieses Gelenk kann über ein elastisches Verbindungselement ausgebildet sein oder über entsprechende Drehachsen verfügen, die insbesondere parallel zur Förderrichtung verlaufen. Das Gelenk ist zwischen Endlosträger und beweglichem Siebstab oder auch einem fest angeordneten Siebstab und dem beweglichen Siebstab ausgebildet. Aufgrund des zur Verfügung stehenden Bauraums zwischen den Endlosträgern ergibt sich hierbei, dass die quer zur Förderrichtung beweglichen Siebstäbe in Draufsicht senkrecht zur Förderrichtung betrachtet kürzer sind. Zur Positionierung der insbesondere schwerkraftbedingt in einer Ausgangslage gehaltenen beweglichen Positionierstäbe kann das Gelenk für die Ausgangslage einen Anschlag aufweisen, der vom Gelenk selbst oder auch dem Endlosträger oder dem Siebstab ausgebildet wird. Zum insbesondere Anheben der beweglichen Siebstäbe im Obertrum können dann Positioniermittel wie Rollen oder Schienen, die entlang der Endlosträger und deren Führungen am Rahmen der Siebbandeinheit oder einer zugehörigen Maschine angeordnet sind, verwendet werden.

Ebenfalls wird die Aufgabe gelöst durch eine Erntemaschine oder eine Ernteguttransportvorrichtung, die eine vor- oder nachbeschriebene Siebbandeinheit aufweist.

Weitere Einzelheiten und Vorteile der Erfindung sind der nachfolgenden Figurenbeschreibung zu entnehmen, schematisch dargestellt zeigt
- Fig. 1: eine erfindungsgemäße Erntemaschine mit einer vor- oder nachbeschriebenen Siebbandeinheit,
- Fig. 2: einen Teil einer erfindungsgemäßen Siebbandeinheit in einer ersten Ansicht,
- Fig. 3: den Gegenstand nach Fig. 2 in einer teilweisen Ansicht in Förderrichtung,
- Fig. 4: eine Teilansicht eines weiteren erfindungsgemäßen Gegenstands,
- Fig. 5: den Gegenstand nach Fig. 4 in einer weiteren Ansicht,
- Fig. 6: eine teilweise Ansicht eines weiteren erfindungsgemäßen Gegenstands,
- Fig. 7: den Gegenstand nach Fig. 6 in einer weiteren Ansicht,
- Fig. 8: den Gegenstand nach Fig. 7 in einer teilweisen Ansicht in Förderrichtung.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden.

Sofern sinnvoll, werden funktional gleichwirkende Elemente mit identischen Bezugsziffern versehen.

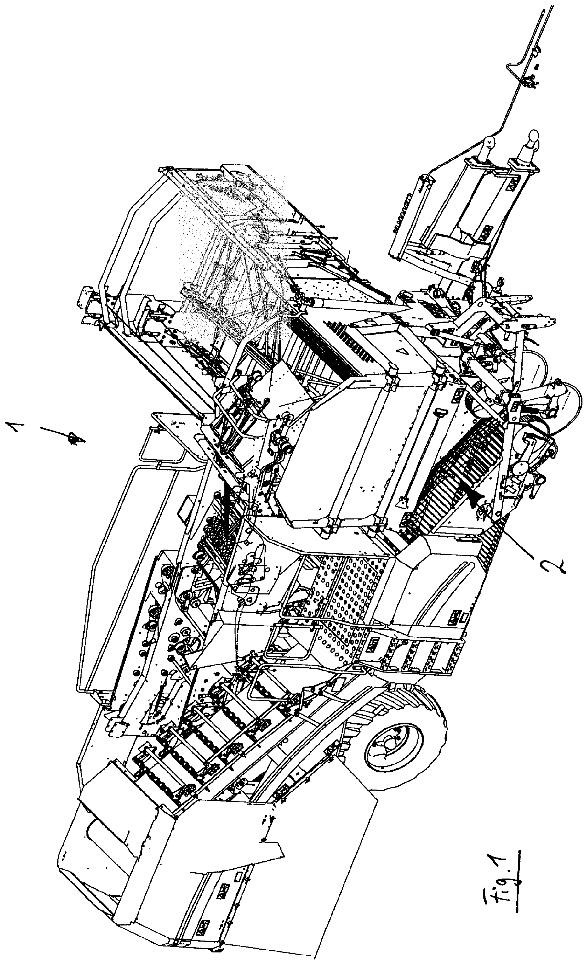

Eine erfindungsgemäße Erntemaschine 1 ist gemäß Fig. 1 mit einer vor- oder nachbeschriebenen Siebbandeinheit ausgestattet, die direkt an die Aufnahmevorrichtung für das Erntegut anschließt und dieses im Obertrum zunächst hochfördert.

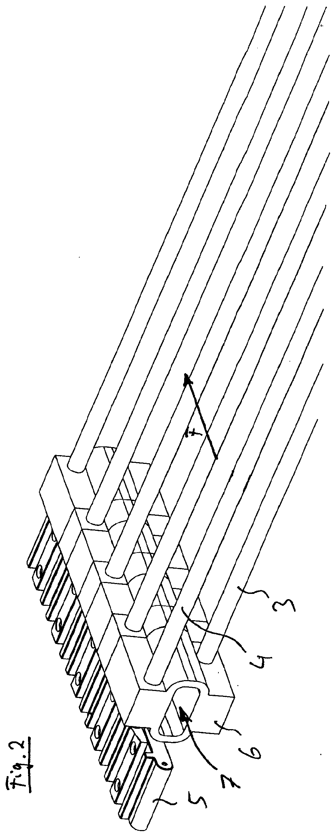

Die Siebbandeinheit ist hierbei mit seitlich der Siebstäbe 3 und 4 verlaufenden Endlosträgern 5 versehen, an denen die Siebstäbe 4 festgelegt sind. Gezeigt ist nur jeweils eine Seite. Die Siebstäbe 3, die in der Ansicht nach Fig. 2 zum Teil von den Siebstäben 4 abgedeckt sind, sind über eine in seiner Form veränderbares Verbindungsstück 6 relativ beweglich zu den Siebstäben 4 bzw. zum Endlosträger 4 angebunden. Das Verbindungsstück 6 weist einen Hohlraum 7 auf, der durch das Hinzufügen oder Entfernen eines Mediums einer Kraft ausgesetzt wird, die eine Formänderung bewirkt. Beispielsweise kann der Hohlraum 7 mit Luft oder mit einer Hydraulikflüssigkeit füllbar sein. Alternativ oder ergänzend kann in dem Verbindungstück ein elektromechanisches Element, d.h. ein Element, das aufgrund einer anlegenden Spannung seine Form ändert, enthalten sein.

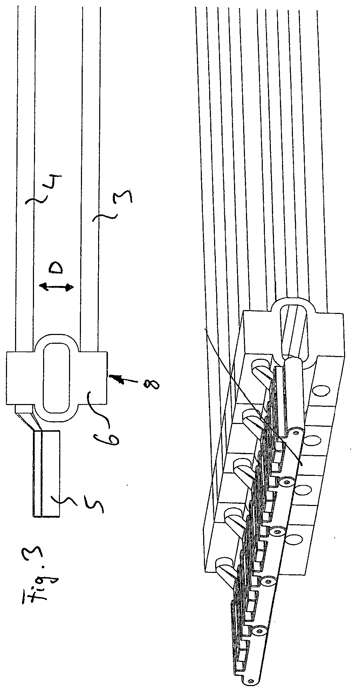

Beispielsweise wird durch das Befüllen des Hohlraums mit Überdruck eine Dehnung in Richtung des Doppelpfeils D senkrecht zur Förderrichtung F bewirkt (vgl. Fig. 3). Ergänzend oder alternativ kann die Form auch durch unterhalb des Verbindungsstücks 6 angeordnete und die Unterseite 8 berührende Anlageelemente variiert werden, deren Abstand relativ zu dem Endlosträger 5 betrachtet in Richtung D vorzugsweise variiert werden kann und die somit zu einem beispielsweise Zusammenführen und Quetschen des Verbindungsstücks 6, welches elastisch ausgebildet ist, führen.

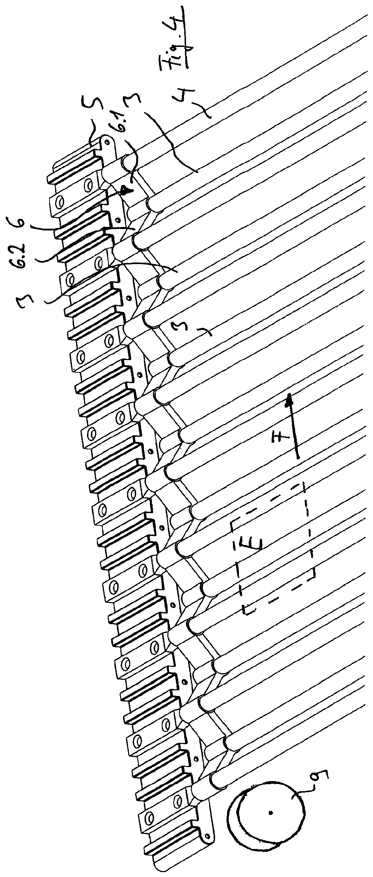

Im Ausführungsbeispiel nach der Fig. 4 sind beweglich angeordnete Siebstäbe 3 über in Förderrichtung F vor- und nachfolgende Teile 6.1 und 6.2 eines Verbindungsstücks 6 an den fest an den Endlosträgern 5 verbundenen Siebstäben 4 angeordnet. Durch die Elastizität der einzelnen Verbindungsstückabschnitte 6.1 und 6.2 und zu den benachbarten fest an den Endlosträgern angeordneten Siebstäben ist in einer nur von der Schwerkraft beeinflussten Lage ein maximaler Abstand in Richtung senkrecht zur Förderebene E vorhanden, wobei die Siebbandeinheit auch Taschen unterhalb dieser Ebene E ausbildet. Die in Figur dargestellte Fläche E stellt nur einen Teil der Förderfläche dar.

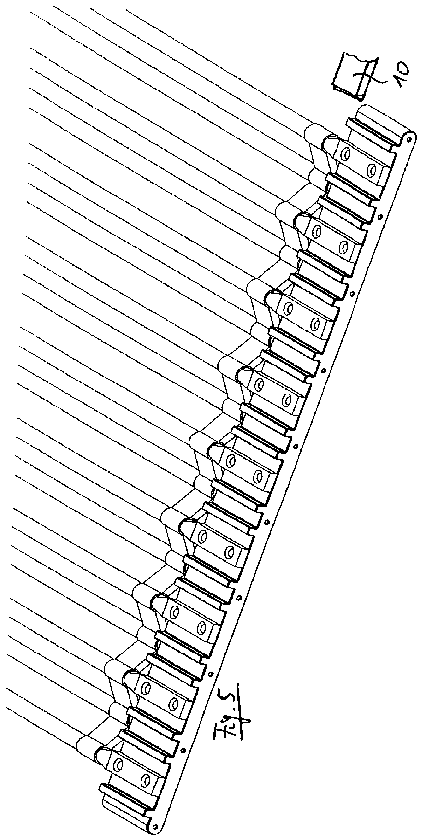

Durch Positioniermittel, die unterhalb der Siebstäbe angeordnet sind und von unten gegen das Verbindungsstück oder die beweglichen Siebstäbe 3 im Verlauf der Förderstrecke gegen drücken können, können die Siebstäbe 3 angehoben werden, so dass sich der Abstand aneinander nachfolgender Siebstäbe in Richtung senkrecht zur Förderebene E verringert. Bei den Positioniermitteln kann es sich wie vorbeschrieben um Rollen 9 oder Gleitschienen 10 handeln, wie sie in den Fig. 4 und 5 angedeutet sind.

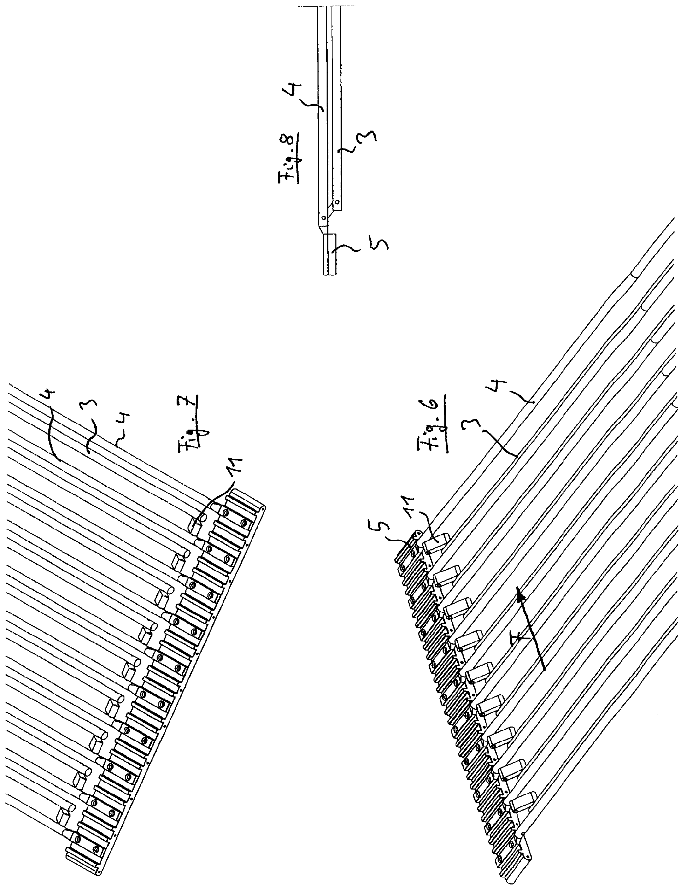

Ein weiteres erfindungsgemäßes Ausbildungsbeispiel ist in der Fig. 6 dargestellt. An den Endlosträgern 5 (dargestellt ist nur der in Förderrichtung F linke Endlosträger) sind wiederum Siebstäbe 4 fest angeordnet. Relativ beweglich hierzu angeordnete Siebstäbe 3 sind über als quer zur Förderrichtung wirksame Scharniere ausgebildete Verbindungsstücke 11 beweglich angeordnet. Durch Einwirken von Positioniermitteln, wie beispielsweise den Rollen 9 oder den Gleitschienen 10 nach Fig. 4 und 5, die an einem Rahmen der Erntegutmaschine oder der Siebbandeinheit angeordnet sein können, können die beweglichen Siebstäbe 3 angehoben werden. Alternativ können die Positioniermittel auch seitlich an einem Ende der variablen Siebstäbe positioniert werden. Es versteht sich, dass die Anordnung von fest an der Maschine oder dem Rahmen der Siebstabeinheit angeordneten Positioniermittel einstellbar ausgestaltet sein kann.

Durch die Ausrichtung der Drehgelenke des Scharniers 11 parallel zur Förderrichtung wird die Zwangsführung der beweglichen Siebstäbe quer zur Förderrichtung bewirkt. Entsprechend sind durch die Begrenzung des Raums zwischen den Endlosträgern 5 (dargestellt in Fig. 8 nur der linke Teil) die innenliegenden und beweglichen Siebstäbe 3 kürzer als die feststehenden Siebstäbe 4. Während die in den Fig. 6 bis 8 dargestellten beweglichen Siebstäbe 3 nur einseitig angebunden sind, können sie zur besseren Führung auch an dem weiteren benachbarten jeweils feststehenden Siebstab 4 über dann ein zusätzlich vorzusehendes weiteres Scharnier zusätzlich geführt werden. Durch das Anheben der Siebstäbe wird der Abstand der nachfolgenden Siebstäbe verringert, so dass die Siebwirkung und die Förderwirkung durch die Ausbildung von Taschen variiert werden können.

## Patentansprüche

1. Siebbandeinheit für eine Erntemaschine (1) oder Ernteguttransportvorrichtung, insbesondere für einen Hackfruchternter oder ein Hackfruchttransportband und zum Absieben von Beimengen eines Gemisches umfassend Erntegut und Beimengen, wobei die Siebbandeinheit (2) ein Siebband umfasst, welches wenigstens zwei, vorzugsweise als Trägerriemen oder -ketten ausgebildete Endlosträger (5) aufweist, zwischen denen in Richtung quer zur Förderrichtung (F) Siebstäbe (3, 4) angeordnet sind, **dadurch gekennzeichnet, dass** zwischen in Förderrichtung (F) einander nachfolgenden Siebstäben (3, 4) ein in seiner Form veränderbares Verbindungsstück (6) angeordnet ist, dergestalt, dass mit einer aufgrund einer Krafteinwirkung erfolgenden Formänderung des Verbindungsstücks unterschiedliche Abstände einander nachfolgender Siebstäbe einhergehen.

2. Siebbandeinheit nach Anspruch 1, **dadurch gekennzeichnet, dass** eine Reihe von Siebstäben (4) an den Endlosträgern (5) befestigt ist und das Verbindungsstück (6) eine Verbindung zwischen den am Endlosträger (5) festgelegten Siebstäben (4) und dem in Förderrichtung (F) jeweils nachfolgendem Siebstab (3) herstellt.

3. Siebbandeinheit nach Anspruch 2, **dadurch gekennzeichnet, dass** die beweglich angeordneten Siebstäbe (3) oberhalb oder unterhalb der festgelegten Siebstäbe (4) angeordnet sind.

4. Siebbandeinheit nach einem der vorhergehenden Ansprüche, **gekennzeichnet durch** ein insbesondere als Rolle (9) oder Führungsschiene (10) ausgebildetes Positioniermittel (9, 10), das durch eine Krafteinwirkung von außen eine Formänderung bewirken kann.

5. Siebbandeinheit nach einem der vorhergehenden Ansprüche, **gekennzeichnet durch** elektromagnetisch wirkende Verbindungsstücke (6), welche durch das Anlegen von äußeren Spannungen bewegt werden können.

6. Siebbandeinheit nach einem der vorhergehenden Ansprüche, **dadurch gekennzeichnet, dass** das Verbindungsstück (6) einen Hohlkörper aufweist, der mit einem Fluid gefüllt werden kann.

7. Siebbandeinheit nach Anspruch 1, **dadurch gekennzeichnet, dass** an den in Förderrichtung (F) betrachtet linken und rechten Endlosträgern (5) Siebstäbe (3, 4) fest angeordnet sind, zwischen denen über ein oder mehrere elastische und somit in ihrer Form variierbar ausgebildete Verbindungsstücke (6) bewegliche Siebstäbe (3, 4) angeordnet sind, wobei die Siebbandeinheit ein Positioniermittel (9, 10) mit einer Anlagefläche für die beweglich angeordneten Siebstäbe (3) oder deren Verbindungsstück (6) aufweist, wobei durch das Einwirken des Positioniermittels der Abstand der beweglich angeordneten Siebstäbe (3) zu den fest angeordneten Siebstäben (4) variiert, wobei das elastische Verbindungsstück (6) deformiert wird.

8. Siebbandeinheit nach Anspruch 7, **dadurch gekennzeichnet, dass** die Verbindungsstücke (6) als PU-Scharniere oder Gummischarniere ausgebildet sind, die jeweils an einem in Förderrichtung (F) vorderen und hinteren Siebstab (3, 4) befestigt sind, wobei der beweglich angeordnete Siebstab (3) in der Mitte zwischen zwei fest angeordneten Siebstäben (4) angeordnet ist.

9. Siebbandeinheit nach Anspruch 8, **dadurch gekennzeichnet, dass** der Abstand des Positioniermittels (9, 10) relativ zum Endlosträger (5) bzw. zu den fest angeordneten Siebstäben (4) variierbar ist.

10. Siebbandeinheit nach einem der vorhergehenden Ansprüchen 7 bis 9, **dadurch gekennzeichnet, dass** das Positioniermittel (9, 10) als Gleitschiene (10), die entlang der Endlosträger (5) an einem Maschinenrahmen oder an einem Rahmen der Siebbandeinheit (2) befestigt sind, oder als entsprechend nur abschnittsweise und punktuell eine Höhenverstellung der beweglichen Siebstäbe (3) bewirkende Rolle (9) ausgebildet ist.

11. Erntemaschine oder Ernteguttransporteinheit mit einer Siebbandeinheit (2) nach einem der vorhergehenden Ansprüche.

12. Erntemaschine nach Anspruch 11, **dadurch gekennzeichnet, dass** die Siebbandeinheit (2) direkt an die Aufnahmevorrichtung für das Erntegut anschließt und das Erntegut in seinem Obertrum zunächst hochfördert.

## Claims

1. Screening belt unit for a harvesting machine (1) or harvested material transport device, in particular for a root crop harvester or a root crop transport belt, and for screening extraneous material out of a mixture comprising harvested material and extraneous material, wherein the screening belt unit (2) comprises a screening belt which has at least two endless carriers (5), preferably in the form of carrier belts or chains, between which screening bars (3, 4) are arranged in a direction transversely to the conveying direction (F), **characterized in that** a connecting piece (6) of variable shape is arranged between screening bars (3, 4) that follow one another in the conveying direction (F), such that different distances between screening bars that follow one another accompany a change in shape, resulting from force application, of the connecting piece.

2. Screening belt unit according to Claim 1, **characterized in that** a series of screening bars (4) are fastened to the endless carriers (5), and the connecting piece (6) produces a connection between the screening bars (4) fixed to the endless carrier (5) and the screening bar (3) that follows in each case in the conveying direction (F).

3. Screening belt unit according to Claim 2, **characterized in that** the movably arranged screening bars (3) are arranged above or below the fixed screening bars (4) .

4. Screening belt unit according to one of the preceding claims, **characterized by** a positioning means (9, 10) which is in particular in the form of a roller (9) or guide rail (10) and can bring about a change in shape by force application from the outside.

5. Screening belt unit according to one of the preceding claims, **characterized by** electromagnetically acting connecting pieces (6) which can be moved by the application of external voltages.

6. Screening belt unit according to one of the preceding claims, **characterized in that** the connecting piece (6) has a hollow body which can be filled with a fluid.

7. Screening belt unit according to Claim 1, **characterized in that** screening bars (3, 4) are arranged fixedly on the endless carriers (5) on the left and right as seen in the conveying direction (F), between which movable screening bars (3, 4) are arranged via one or more connecting pieces (6) that are elastic and thus formed with a variable shape, wherein the screening belt unit has a positioning means (9, 10) with a contact face for the movably arranged screening bars (3) or the connecting piece (6) thereof, wherein, as a result of the action of the positioning means, the distance of the movably arranged screening bars (3) from the fixedly arranged screening bars (4) varies, wherein the elastic connecting piece (6) is deformed.

8. Screening belt unit according to Claim 7, **characterized in that** the connecting pieces (6) are in the form of PU hinges or rubber hinges, which are each fastened to a screening bar (3, 4) at the front and rear in the conveying direction (F), wherein the movably arranged screening bar (3) is arranged in the middle between two fixedly arranged screening bars (4).

9. Screening belt unit according to Claim 8, **characterized in that** the distance of the positioning means (9, 10) relative to the endless carrier (5) or to the fixedly arranged screening bars (4) is variable.

10. Screening belt unit according to one of the preceding Claims 7 to 9, **characterized in that** the positioning means (9, 10) is in the form of a sliding rail (10), which is fastened along the endless carrier (5) to a machine frame or to a frame of the screening belt unit (2), or in the form of a roller (9) that accordingly brings about a height adjustment of the movable screening bars (3) only partially or at points.

11. Harvesting machine or harvested material transport device having a screening belt unit (2) according to one of the preceding claims.

12. Harvesting machine according to Claim 11, **characterized in that** the screening belt unit (2) directly adjoins the receiving device for the harvested material and initially conveys the harvested material upwards in its upper strand.

## Revendications

1. Unité de bande de criblage pour une machine de récolte (1) ou un dispositif de transport de produit récolté, en particulier pour une récolteuse de plantes sarclées ou une bande de transport de plantes sarclées et pour le criblage d'ajouts d'un mélange comprenant le produit récolté et des ajouts, l'unité de bande de criblage (2) comprenant une bande de criblage, qui présente au moins deux supports sans fin (5), de préférence configurés sous forme de courroies ou de chaînes supports, entre lesquels sont agencées des barres de criblage (3, 4) dans la direction transversale à la direction de transport (F), **caractérisé en ce qu'**entre des barres de criblage (3, 4) qui se suivent dans la direction de transport (F) est agencée une pièce de liaison (6) dont la forme est modifiable, de telle sorte qu'une modification de forme de la pièce de liaison, qui se produit en raison de l'action d'une force, s'accompagne de distances différentes entre des barres de criblage qui se suivent.

2. Unité de bande de criblage selon la revendication 1, **caractérisée en ce qu'**une série de barres de criblage (4) est fixée aux supports sans fin (5) et la pièce de liaison (6) établit une liaison entre les barres de criblage (4) fixées au support sans fin (5) et la barre de criblage (3) qui les suit respectivement dans la direction de transport (F).

3. Unité de bande de criblage selon la revendication 2, **caractérisée en ce que** les barres de criblage (3) agencées de manière mobile sont agencées au-dessus ou en dessous des barres de criblage fixes (4).

4. Unité de bande de criblage selon l'une quelconque des revendications précédentes, **caractérisée par** un moyen de positionnement (9, 10), en particulier configuré sous forme de galet (9) ou de rail de guidage (10), qui, par l'action d'une force exercée de l'extérieur, peut provoquer une modification de forme.

5. Unité de bande de criblage selon l'une quelconque des revendications précédentes, **caractérisée par** des pièces de liaison (6) à action électromagnétique, qui peuvent être déplacées par l'application de tensions extérieures.

6. Unité de bande de criblage selon l'une quelconque des revendications précédentes, **caractérisée en ce que** la pièce de liaison (6) présente un corps creux, qui peut être rempli d'un fluide.

7. Unité de bande de criblage selon la revendication 1, **caractérisée en ce que** des barres de criblage (3, 4) sont agencées de manière fixe sur les supports sans fin (5) gauche et droit, tels que vus dans la direction de transport (F), entre lesquelles sont agencées des barres de criblage mobiles (3, 4) par l'intermédiaire d'une ou plusieurs pièces de liaison (6) élastiques et donc configurées sous forme variable, l'unité de bande de criblage présentant un moyen de positionnement (9, 10) ayant une surface d'appui pour les barres de criblage (3) agencées de manière mobile ou leur pièce de liaison (6), l'action du moyen de positionnement faisant varier la distance entre les barres de criblage (3) agencées de manière mobile et les barres de criblage (4) agencées de manière fixe, la pièce de liaison élastique (6) étant déformée.

8. Unité de bande de criblage selon la revendication 7, **caractérisée en ce que** les pièces de liaison (6) sont configurées sous forme de charnières en PU ou de charnières en caoutchouc, qui sont fixées respectivement à une barre de criblage avant et arrière (3, 4) dans la direction de transport (F), la barre de criblage (3) agencée de manière mobile étant agencée au milieu entre deux barres de criblage (4) agencées de manière fixe.

9. Unité de bande de criblage selon la revendication 8, **caractérisée en ce que** la distance du moyen de positionnement (9, 10) par rapport au support sans fin (5) ou aux barres de criblage (4) agencées de manière fixe est variable.

10. Unité de bande de criblage selon l'une quelconque des revendications 7 à 9 précédentes, **caractérisée en ce que** le moyen de positionnement (9, 10) est configuré sous la forme de glissières (10), qui sont fixées le long des supports sans fin (5) à un châssis de machine ou à un châssis de l'unité de bande de criblage (2), ou sous la forme d'un galet (9) qui ne provoque que par sections et ponctuellement un réglage en hauteur des barres de criblage mobiles (3).

11. Machine de récolte ou unité de transport de produit récolté comprenant une unité de bande de criblage (2) selon l'une quelconque des revendications précédentes.

12. Machine de récolte selon la revendication 11, **caractérisée en ce que** l'unité de bande de criblage (2) est directement raccordée au dispositif de réception pour le produit récolté et fait d'abord monter le produit récolté dans son brin supérieur.
